# Europäisches Patentamt
# European Patent Office
# Office européen des brevets

(11) Veröffentlichungsnummer: **0 151 823**
**B1**

(12) **EUROPÄISCHE PATENTSCHRIFT**

(45) Veröffentlichungstag der Patentschrift:
16.03.88

(21) Anmeldenummer: **84201780.8**

(22) Anmeldetag: **01.12.84**

(51) Int. Cl.⁴: **B 01 J 23/22,** B 01 J 27/055,
C 01 B 17/79

(54) Verfahren zur Herstellung eines V2O5 und Alkalisulfat enthaltenden Katalysators zur Oxidation von SO2 zu SO3.

(30) Priorität: **19.01.84 DE 3401676**

(43) Veröffentlichungstag der Anmeldung:
**21.08.85 Patentblatt 85/34**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**EP-A-0 019 174**
**DE-A-2 633 509**
**DE-A-3 033 319**
**FR-A-2 365 372**
**GB-A-972 402**

**Die Akte enthält technische Angaben, die nach dem Eingang der Anmeldung eingereicht wurden und die nicht in dieser Patentschrift enthalten sind.**

(73) Patentinhaber: **METALLGESELLSCHAFT AG, Reuterweg 14 Postfach 3724, D-6000 Frankfurt/M.1 (DE)**

(72) Erfinder: **Fennemann, Wolfgang, Vilbeler Strasse 29, D-6367 Karben 6 (DE)**

(74) Vertreter: **Rieger, Harald, Dr., Reuterweg 14, D-6000 Frankfurt am Main (DE)**

LIBER, STOCKHOLM 1988

**0 151 823**

**Beschreibung**

Die Erfindung betrifft ein Verfahren zur Herstellung eines Vanadiumoxid und Alkaliverbindungen enthaltenden Katalysators zur Oxidation von $SO_2$ zu $SO_3$ durch Tränken vorgefertigter Trägerkörper mit Lösungen, die Vanadium und Alkalien enthalten, und anschließende Trocknung der Trägerkörper bei erhöhten Temperaturen.

Die Tränkung vorgefertigter Trägerkörper hat mehrere Vorteile gegenüber einstufig hergestellten Katalysatoren, bei denen Trägersubstanz und Aktivstoffe vermischt und anschließend zu Katalysatorkörpern geformt werden. Die vorgefertigten Trägerkörper, die im allgemeinen aus $SiO_2$ bestehen, können ohne Rücksicht auf die Aktivsubstanzen hergestellt werden. Dadurch ist es möglich, Trägerkörper mit gleichbleibender Zusammensetzung, hoher innerer Oberfläche und guter mechanischer Festigkeit herzustellen. Bei der Tränkung wird eine gleichmäßige Verteilung der Aktivsubstanzen auf die gesamten Trägerkörper erzielt, so daß Katalysatorkörper einheitlicher Zusammensetzung entstehen und die Gefabr von Fehlchargen vermieden wird. Die Katalysatoren erzielen hohe Umsatzaktivitäten.

Die Herstellung von Katalysatoren durch Tränkung von vorgefertigten Trägerkörpern ist beschrieben in der DE-OS- 30 33 319. Die Tränkung erfolgt mit einer Tränklösung, die pro Liter 600 bis 1100 g $H_2SO_4$ und 140 bis 830 g $V_2O_5$ und Alkalisulfat enthält, bei einer Temperatur zwischen 60°C und der jeweiligen Siedetemperatur der Tränklösung. Die getränkten Trägerkörper werden unter Bewegung getrocknet, wobei die maximale Trocknungstemperatur 700°C beträgt. Die Katalysatoren erzielen hohe Umsatzaktivitäten, auch bei niedrigen Temperaturen, und sind auch bei hohen Temperaturen mechanisch stabil.

Die DE-OS- 30 22 894 beschreibt ein solcbes Verfahren zur Herstellung von Fließbettkatalysatoren, wobei die Trägerkörper nicht mehr als 4 % $Al_2O_3$ enthalten und mit einer schwach schwefelsauren Lösung von Vanadyloxysulfat, ·in der das Vanadium in IV-wertiger Form vorliegt, und Kaliumhydrogensulfat getränkt werden. Anschließend erfolgt eine Trocknung bei Temperaturen von 150 bis 250°C. Die Härtung der Trägerkörper oder der getränkten Trägerkörper erfolgt bei Temperaturen von nicht über 600°C und vorzugsweise bei 200 bis 400°C.

Katalysatoren können auch zweistufig durch Tränken mit alkalischen Lösungen oder neutralen Lösungen hergestellt werden (DE-AS-12 81 407, DE-OS- 15 42 177, AT-PS- 116 361, US-PS- 1 941 426; B. Waeser, "Die Schwefelsäurefabrikation", 1961, Verlag Friedrich Vieweg und Sohn, Braunschweig, Seiten 252 - 258). Dabei tritt jedoch ein gewisser Angriff der alkalischen Lösung auf den $SiO_2$ -Gehalt der Trägerkörper auf. Bei neutralen Lösungen muß wegen der schlechten Löslichkeit der aktiven Substanzen die Tränkung mehrstufig erfolgen, wodurch die Einstellung eines gleichmaßigen Gehaltes an Aktivsubstanzen schwierig ist.

Der Erfindung liegt die Aufgabe zugrunde, die Umsatzaktivität von zweistufig, durch Tränken vorgefertigter Trägerkörper bergestellten Katalysatoren noch weiter zu erhöhen.

Die Lösung dieser Aufgabe erfolgt erfindungsgemäß dadurch, daß die getrockneten Katalysatoren bei einer Temperatur von 750°C bis zu 1000°C unter oxidierenden Bedingungen aktiviert werden. Die Temperatur von 750°C bis zu 1000°C muß in den Katalysatoren auftreten. Die optimale Temperatur liegt vor, wenn einerseits alle Aktivsubstanzen in die Schmelzform überführt sind und andererseits die für die Trägerkörper zulässige maximale Temperatur nicht überschritten wird, bei der eine Beeinflussung der inneren Oberfläche eintritt. Die Höhe der maximal zulässigen Temperatur kann abhängig sein von der Dauer der Einwirkung, d.h. bei einer schnellen Aufheizung kann die maximal zulässige Temperatur höher liegen als bei einer langsamen Aufheizung. Sie kann auch abhängig sein von der Zusammensetzung der Tränklösung, wenn diese mit steigender Temperatur einen stärkeren chemischen Angriff auf die Trägerkörper ausübt. Die für den jeweiligen Katalysator günstigste Temperatur wird durch Bestimmung der Umsatzaktivität ermittelt. Bei alkalisch getränkten Trägerkörpern ist vor der Aktivierung eine Azidifizierung der Aktivsubstanzen erforderlich. Diese ist bei saurer Tränkung oder bei einer neutralen Tränkung mit sulfatischen Aktivsubstanzen nicht erforderlich. Unter "oxidierenden Bedingungen" ist zu verstehen, daß die Gasatmosphäre in Bezug auf die Aktivsubstanzen oxidierend ist. Dies gilt insbesondere beim Abkühlen der Katalysatoren. Die Aktivierung kann in einem getrennten Schritt nach der Trocknung der getränkten Katalysatoren erfolgen. Trocknung und Aktivierung können auch in einem gemeinsamen Aggregat nacheinander durchgeführt werden, z. B. in einem Drehrohr oder auf einem Band nach einer Vortrocknung im bewegten Zustand. Es ist auch möglich, Tränkung, Trocknung und Aktivierung in einem gemeinsamen Aggregat, z. B. Drehrohr, nacheinander durchzuführen. Die Aufheizung kann mit heißen Verbrennungsgasen durch direkten Kontakt mit den Katalysatoren erfolgen, wenn diese Gase oxidierend wirken. Die Aufheizung kann auch durch indirekten Wärmeaustausch erfolgen. In diesem Fall muß die entstehende $SO_2$-haltige Atmosphäre abgesaugt werden, so daß oxidierende Bedingungen durch Zutritt von z. B. Luft vorliegen.

Eine vorzugsweise Ausgestaltung besteht darin, daß die Aktivierung bei Temperaturen von 750°C bis 950°C erfolgt. In diesem Temperaturbereich werden besonders gute Aktivierungen erzielt.

Eine vorzugsweise Ausgestaltung besteht darin, daß die Aktivierung unter Gegenstromführung zwischen den Katalysatoren und der Gasatmosphäre und/oder Absaugung der Gasatmosphäre erfolgt. Die Gasatmosphäre wird von der Austragsseite des Aktivierungsaggregates eingeleitet oder entsprechend abgesaugt. Auf diese Weise wird eine besonders gute Aktivierung erzielt, da der Katalysator mit steigender Temperatur und bei der Abkühlung einer mit Sicherheit oxidierenden Gasatmosphäre ausgesetzt ist.

Eine vorzugsweise Ausgestaltung besteht darin, daß die Verweilzeit der Katalysatoren bei der vorgegebenen Aktivierungstemperatur 5 bis 120 min beträgt. Die Verweilzeit richtet sich nach der Höhe der maximalen

2

Temperatur. Bei niedrigerer Temperatur ist die Verweilzeit länger und bei höherer Temperatur ist die Verweilzeit kürzer. Dadurch werden besonders gute Aktivierungen erzielt.

Eine vorzugsweise Ausgestaltung besteht in der Anwendung des Verfahrens auf die Aktivierung von getrockneten Katalysatoren, die durch Tränkung von Trägerkörpern mit sauren, Alkalisulfat, Vanadiumsulfat und freie Schwefelsäure enthaltenden Lösungen hergestellt werden. Dabei werden besonders gute Aktivierungen erzielt, da der $SiO_2$-Gehalt der Trägerkörper von den beim Tränkprozeß verwendeten schwefelsauren Lösungen nicht angegriffen wird. Besonders geeignet ist das Verfahren gemäß der DE-OS- 30 33 319.

Die Erfindung wird anhand von Beispielen näher erläutert.

## Beispiel 1

Gemäß DE-OS- 30 33 319 wurde ein Katalysator im Laboratoriums-Maßstab wie folgt hergestellt: Mit einer Tränklösung, welche

152,5 g/l $V_2O_5$
310,2 g/l $K_2SO_4$
113,7 g/l $Cs2SO4$
900 g/l $H_2SO_4$

enthielt, wurde ein handelsüblicher $SiO_2$ -Träger (Kugelform; 5,3 mm Durchmesser) getränkt. Die im Überschuß angewendete Tränklösung wurde nach einer Einwirkungszeit von 20 min abgegossen. Das Flüssigkeitsaufnahme-Vermögen des Trägers betrug 720 ml/kg Träger.

Anschließend wurde unter Bewegung im Rotationsverdampfer bei 150°C und Wasserstrahlvakuum teilgetrocknet und in einem zweiten Schritt bei 300°C und Normaldruck im Trockenschrank endgetrocknet.

Ein Teil des Katalysators wurde einer Nachbehandlung unterzogen. Er wurde in einer Schale in dünner Schicht bei Raumtemperatur in einen Muffelofen gestellt und auf 750°C in 75 min hochgezeizt. Durch Vergleichsmessungen wurde festgestellt, daß die Differenz zwischen der gemessenen Gastemperatur und der im Katalysatorkern herrschenden Temperatur relativ gering ist. Sie beträgt beim Aufheizen 15 bis 20°C und erreicht beim Halten nach ca. 5 min. Werte von kleiner 5°C.

Nach 1/2-stündigem Halten bei 750°C wurde der Muffelofen geöffnet, die Schale mit dem Katalysator entnommen und an der Luft abkühlen gelassen.

Aktivitätsmessungen ergaben folgende Ergebnisse:

|  | % $SO_2$ -Umsatz bei °C | |
| --- | --- | --- |
| getrockneter Katalysator (300°C) | 98,82 | 415 |
| nachbehandelter Katalysator (750°C) | 99,06 | 405 |

Es ergab sich demnach durch die Nachbehandlung eine deutliche und wesentliche Aktivitätsverbesserung.

## Beispiel 2

Es wurde wie im Beispiel 1 gearbeitet, jedoch nicht mit überschüssiger, sondern mit abgemessener Tränklösungsmenge.

Hierzu wurde die abgemessene Tränklösung in die im Rotationsverdampfer bei 110°C bewegten Trägerkörper so einlaufen gelassen, daß eine möglichst gleichmäßige Verteilung erfolgte. Um sicherzustellen, daß die Tränklösung vollständig von den Trägern angenommen wird, wurde ihre Menge auf 90 % des maximalen Flüssigkeitsaufnahme-Vermögens der Träger begrenzt. Die Gehalte an Aktivsubstanzen in der Tränklösung wurden entsprechend angehoben, so daß ein mit Beispiel 1 identischer Aktivsubstanz-Gehalt im fertigen Katalysator resultierte.

Pro 1 kg Träger wurden 650 ml Tränklösung folgender Zusammensetzung angewendet:

168,9 g/l $V_2O_5$
343,6 g/l $K_2SO_4$
125,9 g/l $Cs_2SO_4$
900 g/l $H_2SO_4$

Die Trocknung des Trägers unter Vakuum erfolgte direkt nach der Tränkung im selben Rotationsverdampfer. Die weitere Behandlung war identisch mit der im Beispiel 1. Auch die Ergebnisse waren identisch mit denen von Beispiel 1.

**Beispiel 3**

Es wurde wie im Beispiel 2 gearbeitet. Durch Störung des Antriebs des Rotationsverdampfers während der Tränkung wurde ein Teil der Tränklösung in die unbewegten Trägerkörper eingeleitet, wodurch sich eine sehr ungleichmäßige Verteilung ergab. Dies war erkennbar an der unterschiedlichen Färbung der Trägerkörper. Bei der Trocknung bildete sich dementsprechend ein Gemisch aus Katalysatorteilchen mit sehr unterschiedlicher Beladung an Aktivsubstanzen.

Die weitere Behandlung war identisch mit denen in den Beispielen 1 und 2, wobei sich folgende Ergebnisse ergaben:

|  | % $SO_2$-Umsatz bei °C | |
|---|---|---|
| getrockneter Katalysator (300° C) | 98,41 | 420 |
| nachbehandelter Katalysator (750° C) | 99,06 | 405 |

Wie zu erwarten war, lag durch die Störung beim Tränken die Umsatzaktivität niedriger als bei optimaler Herstellung (siehe Beispiele 1 und 2). Durch die Nachbehandlung wurde der Qualitätsunterschied jedoch voll ausgeglichen und eine mit den Beispielen 1 und 2 identische Endqualität erzielt. Die Trägerkörper hatten eine einheitliche Färbung.

Hieraus ergibt sich, daß durch die Nachbehandlung die gesamte Katalysator-Herstellung vereinfacht wird, da bei eventuell nicht ganz optimaler Arbeitsweise deren Auswirkungen auf die Katalysatorqualität durch die Nachbehandlung ausgeglichen werden. Das heißt aber auch, daß die Katalysator-Fertigung wirtschaftlicher wird, da Fehlchargen quasi nicht mehr vorkommen.

**Beispiel 4**

Der Einfluß der Nachbehandlungsbedingungen wurde mit der im Beispiel 3 beschriebenen Fehlcharge näher untersucht. Die Nachbehandlung erfolgte daher jeweils - wie im Beispiel 1 beschrieben - durch
- Einsetzen der Probe in die Muffel bei Raumtemperatur,
- Aufheizen auf gewünschte Behandlungstemperatur,
- Halten bei Behandlungstemperatur,
- Entnahme der heißen Probe nach Ablauf der gewünschten Behandlungsdauer und Abkühlenlassen an Luft.
Je nach Behandlungstemperatur ergaben sich folgende Aufheizzeiten:

| Behandlungstemperatur °C | Aufheizzeit min |
|---|---|
| 600 | 58 |
| 650 | 63 |
| 700 | 68 |
| 750 | 75 |
| 800 | 79 |
| 850 | 86 |
| 900 | 94 |
| 950 | 102 |
| 1000 | 112 |

Der Einfluß der Behandlungsbedingungen ergibt sich aus nachfolgender Tabelle:

| Temperatur °C | Dauer h | % | bei °C |
|---|---|---|---|
| - | - | 98,41 | 420 |
| 600 | 2 | 98,49 | 420 |
| 600 | 6 | 98,68 | 415 |
| 600 | 20 | 98,82 | 415 |
| 600 | 260 | 98,86 | 415 |
| 650 | 0,5 | 98,72 | 415 |
| 650 | 2 | 98,85 | 410 |
| 700 | 0,5 | 99,00 | 410 |
| 700 | 2 | 99,04 | 410 |
| 750 | 0,5 | 99,06 | 405 |
| 750 | 2 | 99,06 | 405 |
| 800 | 0,5 | 99,06 | 405 |
| 850 | 0,5 | 99,02 | 410 |
| 900 | 0,5 | 99,00 | 410 |
| 950 | 0,5 | 98,82 | 415 |
| 1000 | 0,5 | 98,40 | 425 |
| 1000 | 2 | 98,12 | 440 |

Es ergibt sich hieraus, daß mit zunehmender Temperatur bis zu einer optimalen Temperatur von 750 bis 800°C die Aktivität immer weiter verbessert wird. Wird die Temperatur über diesen optimalen Wert hinaus erhöht, so sinkt die Umsatzaktivität wieder ab.

Die Behandlungsdauer verstärkt den jeweiligen Temperatureffekt, ist jedoch nur von zweitrangiger Bedeutung.

## Beispiel 5

Die im Beispiel 4 gezeigte, systematische Untersuchung wurde mit einem anderen, weniger aktiven Katalysator wiederholt. Dieser unterschied sich von dem im Beispiel 4 verwendeten Katalysator dadurch, daß er unter Verwendung eines anderen Trägers hergestellt wurde. Der in Gewichtsprozent definierte Gehalt an Aktivsubstanzen war identisch. Der verwendete Träger unterschied sich in mehreren Punkten:
- Anderer $SiO_2$-Rohstoff mit nur ca. 1/10 der BET-Oberfläche vom Träger aus Beispiel 4 (d.h. 15 $m^2/g$ gegenüber ca. 150 $m^2/g$
- Andere geometrische Form (Zylinder) und Abmessungen. Daraus resultiert eine um ca. 20 % kleinere geometrische Oberfläche.
- Herstellverfahren unterschiedlich (Verformung, Tempern usw.).

Neben der in den Beispielen 1 und 4 näher beschriebenen Nachbehandlung im Muffelofen bei jeweils 1/2 Stunde Haltetemperatur wurde teilweise parallel vergleichend im indirekt beheizten Drehrohr nachbehandelt.

Hierzu wurde chargenweise jeweils 1 l Katalysator in ein Stahldrehrohr eingefüllt, von Raumtemperatur auf Behandlungstemperatur aufgeheizt, 1/2 Stunde bei Behandlungstemperatur gehalten, nach Ablauf der Behandlungszeit sofort heiß entleert und an der Luft abkühlen gelassen. Durch das Drehrohr wurde ein Luftstrom geleitet, um die entstehenden Gase abzutransportieren. In einer zweiten Versuchsreihe wurde der Luftstrom durch synthetisch hergestelltes Rauchgas ersetzt (9 Vol.-% $H_2O$, 9 Vol.-% $CO_2$, 7 Vol.-% $O_2$, 75 Vol.-% $N_2$).

Die anschließende Aktivitätsmessung der derart vorbehandelten Katalysatoren ergab folgende Ergebnisse (Haltetemperatur in allen Fällen 1/2 Stunde):

5

**0 151 823**

| Behandlungsbedingungen | | | Umsatzaktivität | |
|---|---|---|---|---|
| Temperatur C | Apparat | Atmosphäre | % | bei °C |
| - | - | - | 95,7 | 460 |
| 725 | Muffel | Luft | 97,8 | 435 |
| 725 | Drehrohr | Luft | 98,03 | 430 |
| 725 | Drehrohr | Rauchgas | 98,20 | 425 |
| 775 | Muffel | Luft | 98,07 | 425 |
| 775 | Drehrohr | Luft | 98,17 | 425 |
| 775 | Drehrohr | Rauchgas | 98,30 | 425 |
| 825 | Muffel | Luft | 98,33 | 425 |
| 825 | Drehrohr | Luft | 98,47 | 420 |
| 825 | Drehrohr | Rauchgas | 98,59 | 420 |
| 875 | Muffel | Luft | 98,60 | 420 |
| 875 | Drehrohr | Rauchgas | 98,46 | 420 |
| 925 | Muffel | Luft | 98,32 | 430 |
| 975 | Muffel | Luft | 97,9 | 440 |
| 1025 | Muffel | Luft | 96,5 | 450 |

Die Ergebnisse zeigen, daß
a) der durch Aktivieren erzielbare Aktivitätszuwachs Katalysator-Art verschieden hoch ist. Je geringer die Aktivität des nicht nachbehandelten Katalysators, desto größer die Beeinflussung durch Nachbehandlung.
Katalysator Beispiel 4: von 98,41 auf 99,06
Katalysator Beispiel 5: von 95,74 auf 98,60
b) die optimale Nachbehandlungstemperatur je nach Katalysator verschieden ist.
Katalysator Beispiel 4: 750 - 800°C
Katalysator Beispiel 5: 825 - 875 °C
c) andere Apparate vergleichbare Ergebnisse bringen. Die Drehrohrwerte liegen generell etwas höher als die Muffelwerte. Dies ist apparatespezifisch.
d) sowohl indirekt als auch direkt beheizt werden kann. Rauchgas hat eher einen positiven Einfluß auf die Katalysator-Aktivität.

**Beispiel 6**

Der Katalysator wurde in einer Technikumsanlage im 400 l-Chargenbetrieb produziert. Träger und Tränklösung waren vergleichbar zu Beispiel 2. In einem direkt mit Gasbrenner beheizten Drehrohr wurde der Träger auf 100 bis 120°C vorgeheizt, unter Drehen die Tränklösung aufgesprüht und anschließend mit dem Gasbrenner der Katalysator getrocknet. Hierzu wurde in ca. 3 Stunden die Abgastemperatur bis auf ca. 500°C angehoben, dort 1 Stunde gehalten, dann bei abgeschaltetem Brenner unter Luftdurchsaugen in ca. 2 Stunden auf 100 bis 150°C Abgastemperatur abgekühlt und der Katalysator entleert. Die Nachbehandlung erfolgte in einem zweiten, indirekt beheizten Drehrohr, welches kontinuierlich arbeitete. Der Katalysator wurde über eine Dosiervorrichtung in einer Menge von ca. 30 kg/h kontinuierlich an einem kalten Ende des Drehrohres aufgegeben und durchlief das Drehrohr entsprechend dessen Neigung, Füllhöhe usw., wobei das gesamte Temperaturprofil des Drehrohres durchschritten wurde, d.h. der Katalysator trat kalt ein, wurde erhitzt bis zu einer maximalen Temperatur und kühlte auf seinem weiteren Weg durch das Drehrohr in dessen unbeheiztem Ende wieder weitgehend ab. Die an der heißesten Stelle herrschende Temperatur war Leit- bzw. Reglertemperatur. Zur Optimierung der Nachbehandlung wurden die Einflüsse von Gasführung und Temperatur untersucht.
Die Gasführung wurde durch wechselweises Anbringen einer Absaugung an den beiden Drehrohrenden beeinflußt. Wenn im Gleichstrom abgesaugt wurde, d.h. Gasrichtung war gleich Katalysator-Fließrichtung, dann war die Qualität des Katalysators ungenügend. Hierbei erfolgte Abkühlung des Katalysators unter der beim Aktivieren entstehenden Gasatmosphäre (mehrere Vol.-% $SO_2$) mit partieller Reduzierung des $V_2O_5$ -Gehaltes (Katalysator sieht grün aus). Wenn im Gegenstrom abgesaugt wurde, wurde hervorragende Katalysator-Qualität erzielt. In diesem Fall waren die Aktivierungsbedingungen vergleichbar mit den in den Beispielen 1 bis 5 geschilderten Labor-Arbeiten: Die Abkühlung des aktivierten Katalysators erfolgte unter Ausschluß der beim Aktivieren entstehenden Schwefeloxide an Luft.
Der Einfluß der Temperatur wurde in 3 Testreihen im Bereich von 800 bis 1100°C untersucht. Hierbei betrug die durchgesetzte Katalysatormenge jeweils konstant 15, 30, 60 kg/h.
Die Aktivitätsmessungen ergaben folgende Ergebnisse:

6

| Behandlungsbedinungen | | Umsatzaktivität | |
|---|---|---|---|
| Temperatur °C | Durchsatz kg/h | % | bei °C |
| - | - | 98,80 | 415 |
| 800 | 15 | 99,06 | 410 |
| 850 | 15 | 99,16 | 410 |
| 900 | 15 | 99,00 | 415 |
| 950 | 15 | 98,76 | 420 |
| 1000 | 15 | 97,8 | 440 |
| 800 | 30 | 98,95 | 415 |
| 850 | 30 | 99,05 | 410 |
| 900 | 30 | 99,15 | 410 |
| 950 | 30 | 99,02 | 415 |
| 1000 | 30 | 98,78 | 420 |
| 800 | 60 | 98,86 | 415 |
| 850 | 60 | 98,94 | 415 |
| 900 | 60 | 99,01 | 410 |
| 950 | 60 | 99,14 | 410 |
| 1000 | 60 | 99,12 | 410 |
| 1050 | 60 | 98,98 | 415 |

Hieraus ergibt sich, daß die anzuwendende optimale Temperatur mit zunehmender Durchsatzmenge steigt von in diesem Beispiel

ca. 850° C bei 15 kg/h Durchsatz über
ca. 900° C bei 30 kg/h Durchsatz auf
ca. 950 - 1000° C bei 60 kg/h Durchsatz

Die absolut ca. 0,1 % höhere Umsatzaktivität im Vergleich mit im Laboratoriums-Maßstab hergestellter Masse (siehe Beispiele 1 und 4) führen wir auf die vorteilhafte Rauchgasatmosphäre und die bessere Temperaturführung im Drehrohr zurück. Dieser Effekt wurde im Beispiel 5 bereits belegt.

**Beispiel 7**

In einer auf ca. 100° C beheizten Trommel wurde durch entsprechend aufeinander abgestimmten Zulauf von Trägerkörpern und Tranklösung kontinuierlich eine Menge von 100 l/h Träger getränkt. Tränklösung und Träger waren identisch mit Beispiel 2. Der mit Tränklösung befeuchtete, ca. 100° C heiße Träger wurde über eine sinnvolle Überlaufvorrichtung aus der Tränktrommel in ein kontinuierlich arbeitendes Drehrohr an der dem Brenner abgewandten Seite überführt. Das Drehrohr wurde direkt mit einem Gasbrenner beheizt, die Rauchgase wurden mit einem Ventilator so abgesaugt, daß ihr $O_2$-Gehalt kleiner 10 Vol.-%, im Mittel 4 bis 8 Vol.-%, bezogen auf das feuchte Gas, betrug und die Gase im Gegenstrom zum Katalysator strömten.

Hierdurch wurde eine wärmetechnisch günstige Verfahrensweise erreicht. Der Katalysator wurde gleichmäßig aufgeheizt bei gleichzeitiger, entsprechender Abkühlung der Rauchgase. Nach Trocknen des Katalysators wurde im selben Apparat gleichzeitig die Nachbehandlung realisiert, indem die Gaszufuhr so gesteuert wurde, daß die höchste Katalysatortemperatur 850 bis 900° C betrug. Auf der Brennerseite wurde der Katalysator abgezogen und in einer nachgeschalteten Kühleinheit mit Luft gekühlt. Durch gewisse Änderungen kann sowohl das Tränken als auch das Kühlen in dasselbe Drehrohr einbezogen werden. Die Katalysator-Qualität war vergleichbar mit den im Beispiel 6 hergestellten Katalysatoren.

**Bestimmung der Umsatzaktivität:**

Die Prüfapparatur besteht aus einem doppelmanteligen Rohr, das außen mit einer elektrischen Heizwicklung versehen ist. Das eintretende Gas durchströmt den Zwischenraum zwischen dem Prüfkontakt und dem Heizmantel und wird hierbei auf eine Eintrittstemperatur von ca. 500° C aufgeheizt. Durch den Doppelmantel wird sichergestellt, daß jede Lokalüberhitzung der Masse ausgeschlossen ist. In der Mitte des Prüfkontaktes befindet sich ein verschiebbares Thermoelement. Die Temperaturen werden durch Veränderung der Heizwicklung bzw. durch Veränderung der Wärmeisolierung so eingestellt, daß der Temperaturabfall über die gesamte Masseschicht möglichst gleichmäßig verläuft. Als Umsatztemperatur wird die Temperatur 5 cm oberhalb der Siebplatte, auf der die Masse rührt, angegeben. Das Gas durchläuft also das gesamte Temperaturgebiet zwischen 500° C und 380° C. Der Umsatz wird bei fallender Temperatur in Zeitabständen von

**0 151 823**

je 10 Minuten bestimmt und die erhaltenen Werte auf ein Diagramm, bei dem gleichzeitig auch der theoretische Gleichgewichtsumsatz mit angegeben wird, aufgetragen.

Die Vorteile der Erfindung bestehen darin, daß die schon gute Umsatzaktivität von zweistufig durch Tränkung vorgefertigter Trägerkörper hergestellten Katalysatoren für die Umsetzung von $SO_2$ zu $SO_3$ noch beträchtlich erhöht wird und bei der Herstellung auftretende Schwankungen in der Qualität weitgehend ausgeglichen werden können.

**Patentansprüche**

1. Verfahren zur Herstellung eines Vanadiumoxid und Alkaliverbindungen enthaltenden Katalysators zur Oxidation von $SO_2$ zu $SO_3$ durch Tränken vorgefertigter Trägerkörper mit Lösungen, die Vanadium und Alkalien enthalten, und anschließende Trocknung der Trägerkörper bei erhöhten Temperaturen, <u>dadurch gekennzeichnet,</u> daß die getrockneten Katalysatoren bei einer Temperatur von 750°C bis zu 1000°C unter oxidierenden Bedingungen aktiviert werden.

2. Verfahren nach Anspruch 1, <u>dadurch gekennzeichnet,</u> daß die Aktivierung bei Temperaturen von 750°C bis 950°C erfolgt.

3. Verfahren nach Anspruch 1 oder Anspruch 2, <u>dadurch gekennzeichnet,</u> daß die Aktivierung unter Gegenstromführung zwischen den Katalysatoren und der Gasatmosphäre und/oder Absaugung der Gasatmosphäre erfolgt.

4. Verfahren nach einem der Ansprüche 1 bis 3, <u>dadurch gekennzeichnet,</u> daß die Verweilzeit der Katalysatoren bei der vorgegebenen Aktivierungstemperatur 5 bis 120 min beträgt.

5. Anwendung des Verfahrens gemäß einem der Ansprüche 1 bis 4 auf die Aktivierung von getrockneten Katalysatoren, die durch Tränkung von Trägerkörpern mit sauren, Alkalisulfat, Vanadiumsulfat und freie Schwefelsäure enthaltenden Lösungen hergestellt werden.

**Claims**

1. A process of producing a vanadium oxide and alkali metal compounds containing catalyst for the oxidation of $SO_2$ to $SO_3$, which process comprising impregnating prefabricated carrier bodies with solutions which contain vanadium and alkalies and subsequently drying the carrier bodies at elevated temperatures, characterized in that the dried catalyst is activated under oxidizing conditions at a temperature from 750 to 1000°C.

2. A process according to claim 1, characterized in that the activation is effected at temperatures from 750 to 950°C.

3. A process according to claim 1 or 2, characterized in that the activation is effected with counter-currant flows of the catalyst and the gas atmosphere and/or with an exhausting of the gas atmosphere.

4. A process according to any of claims 1 to 3, characterized in that the catalyst is held at the predetermined activating temperature for 5 to 120 minutes.

5. The use of the process according to any of claims 1 to 4 for the activation of a dried catalyst produced by an impregnation of carrier bodies with acid solutions which contain alkali metal sulfate, vanadium sulfate and free sulfuric acid.

**Revendications**

1. Procédé de préparation d'un catalyseur contenant de l'oxyde de vanadium et des composés de métal alcalin pour l'oxydation de $SO_2$ en $SO_3$ par imprégnation de supports fabriqués à l'avance à l'aide de solutions qui contiennent du vanadium et des métaux alcalins, et ensuite par séchage des supports à des températures élevées, caractérisé en ce qu'il consiste à activer les catalyseurs séchés à une température de 750°C à 1000°C, dans des conditions oxydantes.

2. Procédé suivant la revendication 1, caractérisé en ce qu'il consiste à effectuer l'activation à des températures de 750°C à 950°C.

3. Procédé suivant la revendication 1 ou la revendication 2, caractérisé en ce qu'il consiste à effectuer l'activation avec passage à contre-courant du catalyseur et de l'atmosphère gazeuse et/ou avec aspiration de l'atmosphère gazeuse.

4. Procédé suivant l'une des revendications 1 à 3, caractérisé en ce que la durée de séjour des catalyseurs à la température d'activation prescrite est de 5 à 120 minutes.

5. Utilisation du procédé suivant l'une des revendications 1 à 4, pour l'activation de catalyseurs séchés, qui sont préparés par imprégnation de supports par des solutions acides contenant un sulfate de métal alcalin, du sulfate de vanadium et de l'acide sulfurique libre.

8